(19) **Europäisches Patentamt / European Patent Office / Office européen des brevets**

(11) **EP 1 948 758 B1**

(12) **EUROPEAN PATENT SPECIFICATION**

(45) Date of publication and mention
of the grant of the patent:
**30.06.2010 Bulletin 2010/26**

(51) Int Cl.:
*C09K 11/78* (2006.01)  *H01J 61/44* (2006.01)
*C09K 11/59* (2006.01)

(21) Application number: **06821335.4**

(22) Date of filing: **06.11.2006**

(86) International application number:
**PCT/IB2006/054116**

(87) International publication number:
**WO 2007/054875 (18.05.2007 Gazette 2007/20)**

(54) **LOW-PRESSURE MERCURY VAPOR DISCHARGE LAMP AND COMPACT FLUORESCENT LAMP**

NIEDERDRUCKQUECKSILBERDAMPFENTLADUNGSLAMPE UND KOMPAKTE FLUORESZENZLAMPE

LAMPE A DECHARGE A VAPEUR DE MERCURE ET A BASSE PRESSION ET LAMPE FLUORESCENTE COMPACTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.11.2005 EP 05110592**

(43) Date of publication of application:
**30.07.2008 Bulletin 2008/31**

(73) Proprietors:
• **Koninklijke Philips Electronics N.V.**
**5621 BA Eindhoven (NL)**
Designated Contracting States:
**AT BE BG CH CY CZ DK EE ES FI FR GB GR HU IE IS IT LI LT LU LV MC NL PL PT RO SE SI SK TR**
• **Philips Intellectual Property & Standards GmbH**
**20099 Hamburg (DE)**
Designated Contracting States:
**DE**

(72) Inventors:
• **HILDENBRAND, Volker, D.**
**NL-5656 AA Eindhoven (NL)**
• **SIGAI, Gary**
**NL-5656 AA Eindhoven (NL)**
• **SCHMIDT, Peter, J.**
**NL-5656 AA Eindhoven (NL)**

(74) Representative: **Bekkers, Joost J.J**
**Philips**
**Intellectual Property & Standards**
**P.O. Box 220**
**5600 AE Eindhoven (NL)**

(56) References cited:
**EP-A- 1 428 863     WO-A-2005/045881**
**WO-A-2005/074011     US-A1- 6 137 217**

**Description**

FIELD OF THE INVENTION

The invention relates to a low-pressure mercury vapor discharge lamp comprising a light-emitting discharge vessel provided with a luminescent layer.

The invention also relates to a compact fluorescent lamp.

BACKGROUND OF THE INVENTION

In mercury vapor discharge lamps, mercury constitutes the primary component for the (efficient) generation of ultraviolet (UV) light. A luminescent layer comprising a luminescent material may be present on an inner wall of the discharge vessel to convert UV to other wavelengths, for example, to UV-B and UV-A for tanning purposes (sun tanning lamps) or to visible radiation for general illumination purposes. Such discharge lamps are therefore also referred to as fluorescent lamps. Fluorescent lamps for general illumination purposes usually comprise a mixture of three luminescent materials, for example, a blue-luminescent europium-activated barium magnesium aluminate, $BaMgAl_{10}O_{17}:Eu^{2+}$ (also referred to as BAM), a green-luminescent cerium-terbium co-activated lanthanum phosphate, $LaPO_4:Ce,Tb$ (also referred to as LAP) and a red luminescent europium-activated yttrium oxide, $Y_2O_3:Eu$ (also referred to as YOX).

The discharge vessel of low-pressure mercury vapor discharge lamps is usually circular and comprises both elongated and compact embodiments. Generally, the tubular discharge vessel of compact fluorescent lamps comprises a collection of relatively short straight parts having a relatively small diameter, which straight parts are connected together by means of bridge parts or via bent parts. Compact fluorescent lamps are usually provided with an (integrated) lamp cap. Normally, the means for maintaining a discharge in the discharge space are electrodes arranged in the discharge space. Alternatively, the low-pressure mercury vapor discharge lamp comprises a so-called electrodeless low-pressure mercury vapor discharge lamp.

A low-pressure mercury vapor discharge lamp of the type described in the opening paragraph is known from International Application WO-A 00/67 295. The known discharge lamp comprises a discharge vessel having a tubular portion provided with a metal oxide layer and a luminescent layer on a surface facing the discharge space. The tubular portion of the discharge vessel preferably has a further metal oxide layer which acts as an alkali metal-repellent layer. In an embodiment, the metal-oxide comprises nano-crystalline aluminum oxide particles, also known as Alon-C, with crystallite size of between approximately 20 nm and 40 nm. In another embodiment, the metal-oxide layer comprises larger particles with particle sizes between approximately 100 nm and 1000 nm, which serve as a reflector for light generated in the discharge and the luminescent layer, respectively. Instead of aluminum oxide also other oxides like yttrium oxide, zirconium oxide or mixtures of yttrium oxide with alkaline earth borates can be used. The known low-pressure mercury-vapor discharge lamp has comparatively low mercury consumption.

From EP 1428863 A1 are known fluorescent and compact fluorescent lamps having a discharge vessel with a phosphor layer comprising four or more optimized phosphors emitting within specific spectral ranges. The at least four phosphors are selected from a blue phosphor, a blue-green phosphor, a green phosphor, an orange phosphor and a red phosphor. The lamp may include a second layer forming an ultraviolet barrier layer comprising alumina.

A drawback of the use of the known low-pressure mercury vapor discharge lamp is that the luminous efficiency has not increased in the last years while those of high-intensity discharge (HID) lamps and light-emitting diode (LED) lamps have. This development has led to a reduced gap between HID and LED lamps on one side and fluorescent lamps on the other.

SUMMARY OF THE INVENTION

The invention has for its object to eliminate the above disadvantage wholly or partly. According to the invention, a low-pressure mercury vapor discharge lamp of the kind mentioned in the opening paragraph for this purpose comprises:

- a light-emitting discharge vessel enclosing, in a gastight manner, a discharge space provided with a filling of mercury and a rare gas,
- the discharge vessel comprising discharge means for maintaining a discharge in the discharge space,
- the discharge vessel being provided with a luminescent layer, the luminescent layer comprising a mixture of at least a red and a green luminescent material,
- the red luminescent material comprising $(Y,Gd)_2O_3:Eu$,
- the green luminescent material comprising $(Ba,Ca,Sr)_2SiO_4:Eu$ and/or $(Sr,Ca,Ba,Mg,Zn)Si_2N_2O_2:Eu$,
- particles of the green luminescent material being surrounded by a coating of aluminum oxide.

Surprisingly, this mixture of the red luminescent material comprising $(Y,Gd)_2O_3$:Eu and the aluminum oxide-coated green luminescent material comprising $(Ba,Ca,Sr)_2SiO_4$:Eu and/or $(Sr,Ca,Ba,Mg,Zn)Si_2N_2O_2$:Eu, yields a low-pressure mercury- vapor discharge lamp with improved luminous efficiency as compared to the known luminescent materials employed in the known low-pressure mercury-vapor discharge lamp.

The lumen equivalent, also denoted as LE, of a luminescent material (phosphor) is a measure for how efficient the phosphor emission P($\lambda$) in Watt is in generating luminous flux in lumen. It is defined as:

$$LE = 683\ \frac{lm}{W}\ \frac{\int\limits_{380nm}^{780nm} P(\lambda) \times \bar{y}(\lambda)\,d\lambda}{\int\limits_{380nm}^{780nm} P(\lambda)\,d\lambda}$$

wherein y($\lambda$) is the tri-stimulus value or visibility function value. Typical values for the commonly used luminescent materials in low-pressure mercury vapor lamps are:

70 lm/W for $BaMgAl_{10}O_{17}$:Eu (blue phosphor),
495 lm/W        for $LaPO_4$:Ce,Tb (green phosphor), and
285 lm/W        for $Y_2O_3$:Eu (red phosphor).

In known mixtures of luminescent materials for correlated color temperatures between 2700 and 6500 K, the main components are green and red. Generally speaking, the volume fraction of the blue component varies between approximately 1% and approximately 25%, that of the green component between approximately 20% and approximately 50% and that of the red component between approximately 20% and approximately 70%. In mixtures with a highly-correlated color temperature, the contribution of the green luminescent component is highest. The overall contribution of one of the components to the luminous efficiency of the system is determined by the volume fraction multiplied by the lumen equivalent, assuming that the quantum efficiencies of the luminescent materials used are, generally, close to or above 0.9. Since the self-absorption of resonant radiation in the known low-pressure mercury-vapor discharge lamps is relatively small, that is between 0% and approximately 30%, the effect of absorption of reflected light is of relatively minor importance, because the average absorption of the phosphor components is in the order of larger than 80%.

The green luminescent material $(Sr,Ca,Ba,Mg,Zn)Si_2N_2O_2$:Eu has a relatively high lumen equivalent (larger than that of the known $LaPO_4$:Ce,Tb (LAP), $CeMgAl_{11}O_{19}$:Tb (CAT) or $GdMgB_5O_{10}$:Ce,Tb (CBT)). A drawback of the use of an oxonitridosilicate is that it is relatively difficult to synthesize resulting in a relatively high cost price. An alternative for $(Sr,Ca,Ba,Mg,Zn)Si_2N_2O_2$:Eu is the Eu-doped Ba-Sr-Ca-orthosilicate with general formula $(Ba,Sr,Ca)_2SiO_4$:Eu. The latter luminescent material is a low-cost substitute for the oxonitridosilicate. The Eu-doped Ba-Sr-Ca-orthosilicate can be prepared relatively easily from relatively inexpensive raw materials. However, the stability in humid environments and in particular in mercury discharge lamps is relatively bad. As far as known to the inventors, Eu-doped Ba-Sr-Ca-orthosilicates have never been employed in low-pressure mercury-vapor discharge lamps.

By providing a protective coating of aluminum oxide on the particles of the green luminescent materials, (Ba, Ca,Sr)$_2$SiO$_4$:Eu or $(Sr,Ca,Ba,Mg,Zn)Si_2N_2O_2$:Eu, the stability of the luminescent materials is largely improved. Provision of a protective coating on the particle of the red luminescent material comprising $(Y,Gd)_2O_3$:Eu is not deemed necessary.

The mixture of the red luminescent material comprising $(Y,Gd)_2O_3$:Eu and the aluminum oxide-coated green luminescent material $(Ba,Ca,Sr)_2SiO_4$:Eu, results in a low-pressure mercury-vapor discharge lamp with a lumen equivalent of the aluminum oxide-coated green luminescent material $(Ba,Ca,Sr)_2SiO_4$:Eu of as high as 505 lm/W.

The mixture of the red luminescent material comprising $(Y,Gd)_2O_3$:Eu and the aluminum oxide-coated green luminescent material comprising $(Ba,Ca,Sr)_2SiO_4$:Eu and/or $(Sr,Ca,Ba,Mg,Zn)Si_2N_2O_2$:Eu, yields a low-pressure mercury-vapor discharge lamp with an improved lumen equivalent as compared to the known luminescent materials employed in the known low-pressure mercury-vapor discharge lamp.

A preferred embodiment of the low-pressure mercury vapor discharge lamp according to the invention is **characterized in that** the particles of the green luminescent material and particles of the red luminescent material have an average diameter greater than or equal to 2 $\mu$m. The absorption of the red luminescent material can be increased if the particle size is increased. However, the particle size should not be too large to avoid problems with the stability of suspensions used to coat the tubes of the fluorescent lamps.

Another preferred embodiment of the low-pressure mercury vapor discharge lamp according to the invention is **characterized in that** at least 50% of the particles of the green and red luminescent materials have an average diameter greater than or equal to approximately 5 μm. For example, the red luminescent material comprising $(Y,Gd)_2O_3$:Eu with a particle size of 5 micrometers has an absorption between 0.85 and 0.92 at 254 nm. The absorption can be increased if the particle size is increased. However, the particle size should not be too large to avoid problems with the stability of the suspensions employed to coat the tubes of the fluorescent lamps.

The effectiveness of the protective coating on the particles of the green luminescent material can be improved. To this end, a preferred embodiment of the low-pressure mercury vapor discharge lamp according to the invention is **characterized in that** the particles of the green luminescent material are provided with a coating of silica surrounded by the coating of aluminum oxide.

Fluorescent lamps for general illumination purposes usually comprise a mixture of three luminescent materials, i.e. a blue-luminescent, a green-luminescent and a red luminescent material. To this end, a preferred embodiment of the low-pressure mercury vapor discharge lamp according to the invention is **characterized in that** the luminescent layer further comprises a blue luminescent material. Preferably, the blue luminescent material comprises $BaMgAl_{10}O_{17}$:Eu or $(Sr,Ca,Mg)_5(PO_4)_3Cl$:Eu.

Preferably, the means for maintaining the discharge in the discharge space comprise electrodes arranged in the discharge space.

The invention also relates to a compact fluorescent lamp wherein a lamp housing is attached to the discharge vessel of the low-pressure mercury-vapor discharge lamp, which lamp housing is provided with a lamp cap.

BRIEF DESCRIPTION OF THE DRAWINGS

These and other aspects of the invention will be apparent from and elucidated with reference to the embodiments described hereinafter.

In the drawings:

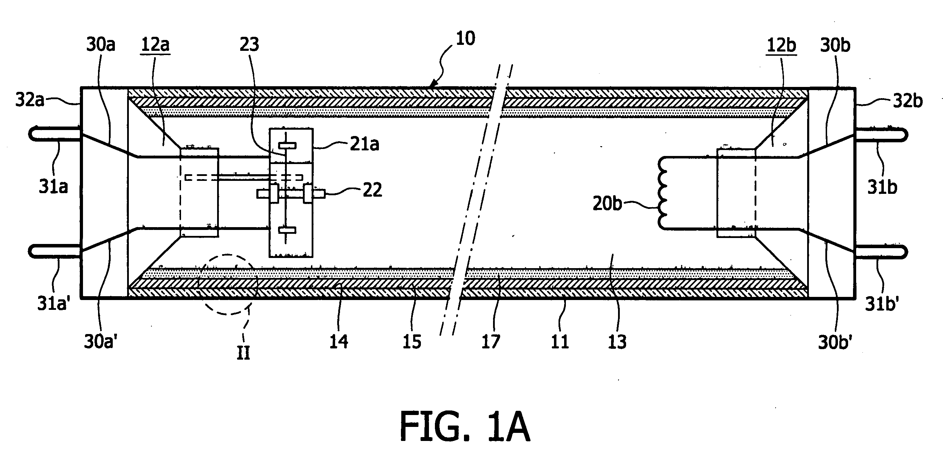

Figure 1A is an embodiment of the low-pressure mercury vapor discharge lamp according to the invention in a longitudinal section, and

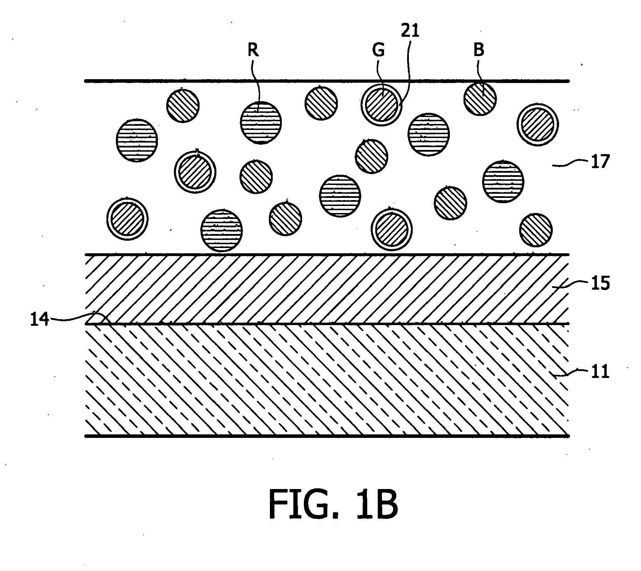

Figure 1B is a detail of the discharge lamp of Fig. 1, taken on the line II in Fig. 1.

The Figures are purely diagrammatic and not drawn to scale. Particularly for clarity, some dimensions are strongly exaggerated. Similar components in the Figures are as much as possible denoted by the same reference numerals.

DETAILED DESCRIPTION OF THE PREFERRED EMBODIMENTS

Figure 1A schematically shows a low-pressure mercury vapor discharge lamp comprising a glass discharge vessel 10 having a tubular portion 11 which is transmissive to radiation generated in the discharge vessel 10, and a first and a second end portion 12a, 12b. The tubular portion 11 has a length of approximately 120 cm and an external diameter of 2.5 cm for a so-called T8 fluorescent lamp and an external diameter of 1.6 cm for a so-called T5 fluorescent lamp. The discharge vessel 10 encloses a discharge space 13 comprising a filling of several mg of mercury and a rare gas, in this example argon, in a gastight manner. The end portions 12a; 12b each support an electrode 20b (the electrode on the first end portion 12a is not shown in Figure 1A) arranged in the discharge space 13. The electrodes 20b constitute the discharge means of this embodiment of the low-pressure mercury-vapor discharge lamp. Current supply conductors 30a, 30a'; 30b, 30b' of the electrodes 20b extend through the end portions 12a; 12b to the exterior of the discharge vessel 10. The current supply conductors 30a, 30a'; 30b, 30b' are connected to contact pins 31a, 31a'; 31b, 31b' secured to a lamp base 32a; 32b. An electrode ring 21a is arranged around each electrode 20b (the electrode ring on the second end portion 12b is not shown in Figure 1A).

A glass capsule 22 is clamped to the electrode ring 21a, with which capsule mercury is dosed during manufacture of the discharge lamp. To this end, a metal wire 23 which was tightened to the glass capsule 22, was inductively heated in a high-frequency electromagnetic field, during which the capsule 22 was cut through and the mercury to be dosed from the capsule 22 was released to the discharge space 13.

In the example of Figure 1A and Figure 1B a protective layer 15 (see also Figure 1B) is provided on the surface 14 of the tubular portion 11 facing the discharge space. The protective layer 15 comprises, for example a nano-crystalline aluminum oxide $(Al_2O_3)$ or an yttrium oxide $(Y_2O_3)$ layer having a coating weight of approximately 30 μg/cm². Higher coating weights are required for aluminum oxide layers with particle sizes between approximately 100 nm and about 1 μm. Typical coating weights for these materials are between approximately 0.2 and 1.5 mg/cm². In addition, the protective layer 15 is provided with a luminescent layer 17 with a coating weight greater than 1.0 mg/cm² comprising $(Y,Gd)_2O_3$:Eu as red luminescent material, $(Ba,Ca,Sr)_2SiO_4$:Eu and/or $(Sr,Ca,Ba,Mg,Zn)Si_2N_2O_2$ as green luminescent material:

Eu and $BaMgAl_{10}O_{17}$:Eu or $(Sr,Ca,Mg)_5(PO_4)_3Cl$:Eu as blue luminescent material. Particles G of the green luminescent material are surrounded by a coating 21 of aluminum oxide. Preferably, the particles G of the green luminescent material are provided with a one-layer coating of aluminum oxide. Preferably, the particles G of the green luminescent material are provided with a two-layer coating of silica and aluminum oxide, the silica coating surrounding the coating of aluminum oxide.

Preferably, the particles G of the green luminescent material and particles R of the red luminescent material have an average diameter greater than or equal to approximately 2 $\mu$m. On the one hand, the absorption of the red luminescent material is increased if the particle size is increased. On the other hand, to avoid problems with the stability of suspensions used to coat the tubes of the fluorescent lamps, the particle size should not be too large. Preferably, at least 50% of the particles G, R of the green and red luminescent materials have an average diameter greater than or equal to 5 $\mu$m. For example, the red luminescent material comprising $(Y,Gd)_2O_3$:Eu with a particle size of 5 micrometer has an absorption between 0.75 and 0.85 at 254 nm.

For the green luminescent material $(Sr,Ca,Ba,Mg,Zn)Si_2N_2O_2$:Eu, the following stochiometries can be selected:

$$(Sr_{1-a-b-c-d-e}Ca_bBa_cMg_dZn_e)Si_xN_yO_z:Eu_a,$$

wherein

$$0.002 \leq a \leq 0.2,$$

$$0.0 \leq b \leq 0.25,$$

$$0.0 \leq c \leq 0.25,$$

$$0.0 \leq d \leq 0.25,$$

$$0.0 \leq e \leq 0.25,$$

$$1.5 \leq x \leq 2.5,$$

$$1.5 \leq y \leq 2.5,$$

and

$$1.5 \leq z \leq 2.5.$$

A favorable example of such green luminescent materials is the oxonitridosilicate $SrSi_2N_2O_2$:Eu with a lumen equivalent of approximately 527 lm/W compared with 495 lm/W for the standard green phosphor $LaPO_4$:Ce,Tb. Another favorable example of such green luminescent materials is the oxonitridosilicate with a stoichiometry found of $SrSi_{2.24}N_{2.11}O_{2.26}Eu_{0.020}$ with a lumen equivalent of approximately 524 lm/W.

The combination of the $Eu^{2+}$-doped oxonitridosilicate with e.g. Eu-doped $BaMgAl_{10}O_{17}$ or $(Y,Gd)_2O_3$:Eu results in a phosphor mixture with a higher lumen equivalent and higher efficiency as compared to the standard luminescent materials. If the quantum efficiencies are comparable and the absorption is not below 80%, the lumen equivalent of the component times the volume fraction of the phosphor determines the lumen equivalent of the total mixture. Since the lumen equivalent of the Eu-doped $SrSi_2N_2O_2$ is approximately 5 to 6 % higher than that of the standard $LaPO_4$:Ce,Tb and the volume percentage of the green component is in the order of 20-50 % a luminous efficiency increase of 1-3% is expected.

During the manufacture of a low-pressure mercury-vapor discharge lamp according to the invention, coated particles G of the green luminescent material comprising $(Ba,Ca,Sr)_2SiO_4$:Eu or $(Sr,Ca,Ba,Mg,Zn)Si_2N_2O_2$:Eu, are mixed with particles R of the red luminescent material $(Y,Gd)_2O_3$:Eu and with particles B of the standard blue luminescent material $BaMgAl_{10}O_{17}$:Eu in the appropriate ratio in order to generate common color temperatures for general lighting between 2700K and 6500K, in extreme cases up to 14,000K. The phosphor coating is deposited on a glass tubing e.g. a T8 or a T5 tube using water- or solvent-based suspensions. A common solvent is butylacetate in which nitrocellulose is used as binder to adjust the viscosity and the layer thickness, respectively. In water, polyacrylic acids can be used as stabilizers and e.g. polyethers or polyacids with a high molecular weight are used as binders. The suspensions are subsequently poured into the tubes and dried with an air flow. The binder is removed with a short heating step in air or oxygen. The sintering of the fluorescent layer during the manufacture of the discharge vessel takes place at temperatures in the range from approximately 500°C to approximately 600°C.

An alternative embodiment of the discharge lamp in accordance with the invention comprises so-called electrodeless discharge lamps, in which the means for maintaining an electric discharge are situated outside a discharge space surrounded by the discharge vessel. Generally said means are formed by a coil provided with a winding of an electric conductor, with a high-frequency voltage, for example having a frequency of approximately 3 MHz, being supplied to said coil, in operation. In general, said coil surrounds a core of a soft-magnetic material.

An alternative embodiment of the discharge lamp in accordance with the invention comprises a so-called compact fluorescent lamp. Such a compact fluorescent lamp comprises a lamp housing attached to the discharge vessel of the low-pressure mercury-vapor discharge lamp, which lamp housing is provided with a lamp cap.

## Claims

1. A low-pressure mercury vapor discharge lamp comprising:

   - a light-emitting discharge vessel (10) enclosing, in a gastight manner, a discharge space (13) provided with a filling of mercury and a rare gas,
   - the discharge vessel (10) comprising discharge means for maintaining a discharge in the discharge space (13),
   - the discharge vessel (10) being provided with a luminescent layer (17), the luminescent layer (17) comprising a mixture of at least a red and a green luminescent material,
   - the red luminescent material comprising $(Y,Gd)_2O_3$:Eu,
   - the green luminescent material comprising $(Ba,Ca,Sr)_2SiO_4$:Eu and/or $(Sr,Ca,Ba,Mg,Zn)Si_2N_2O_2$:Eu,
   - particles (G) of the green luminescent material being surrounded by a coating (21) of aluminum oxide.

2. A low-pressure mercury vapor discharge lamp as claimed in claim 1, wherein the particles (G) of the green luminescent material and particles (R) of the red luminescent material have an average diameter greater than or equal to 2 $\mu$m

3. A low-pressure mercury vapor discharge lamp as claimed in claim 1 or 2, wherein at least 50% of the particles (G, R) of the green and red luminescent materials have an average diameter greater than or equal to 5 $\mu$m

4. A low-pressure mercury vapor discharge lamp as claimed in claim 1 or 2, wherein the particles (G) of the green luminescent material are provided with a coating of silica surrounded by the coating of aluminum oxide.

5. A low-pressure mercury vapor discharge lamp as claimed in claim 1 or 2, wherein the luminescent layer further comprises a blue luminescent material.

6. A low-pressure mercury vapor discharge lamp as claimed in claim 5, wherein the blue luminescent material comprises BaMgAl10O17:Eu or (Sr,Ca,Mg)5(PO4)3Cl:Eu.

7. A low-pressure mercury vapor discharge lamp as claimed in claim 1 or 2, wherein the means for maintaining the discharge in the discharge space (13) comprise electrodes (20b) arranged in the discharge space (13).

8. A compact fluorescent lamp comprising a low-pressure mercury-vapor discharge lamp as claimed in claim 1 or 2, **characterized in that** a lamp housing is attached to the discharge vessel of the low-pressure mercury-vapor discharge lamp, which lamp housing is provided with a lamp cap.

## Patentansprüche

1. Niederdruckquecksilberdampfentladungslampe, welche die nachfolgenden Elemente umfasst:

   - ein Licht emittierendes Entladungsgefäß (10), das auf gasdichte Art und Weise einen Entladungsraum (13) einschließt, der mit einer Füllung aus Quecksilber und einem seltenen Gas versehen ist,
   - wobei das Entladungsgefäß (10) Entladungsmittel aufweist zum Beibehalten einer Entladung in dem Entladungsraum (13),
   - wobei das Entladungsgefäß (10) mit einer lumineszierenden Schicht (17) versehen ist, wobei diese lumineszierende Schicht (17) ein Gemisch aus wenigstens einem roten und einem grünen lumineszierenden Material aufweist,
   - wobei das rote lumineszierende Material $(Y,Gd)_2O_3$:Eu aufweist,
   - wobei das grüne lumineszierende Material $(Ba,Ca,SR)_2SiO_4$: Eu und/oder $(Sr,Ca,Ba,Mg,Zn)Si_2N_2O_2$:Eu aufweist,
   - wobei Teilchen (G) des grünen lumineszierenden Materials von einer Beschichtung (21) aus Aluminiumoxid umgeben sind.

2. Niederdruckquecksilberdampfentladungslampe nach Anspruch 1, wobei die Teilchen (G) des grünen lumineszierenden Materials und Teilchen (R) des roten lumineszierenden Materials einen mittleren Durchmesser größer als oder gleich 2 $\mu$m haben.

3. Niederdruckquecksilberdampfentladungslampe nach Anspruch 1 oder 2, wobei wenigstens 50% der Teilchen (G, R) des grünen und roten lumineszierenden Materials einen mittleren Durchmesser größer als oder gleich 5 $\mu$m haben.

4. Niederdruckquecksilberdampfentladungslampe nach Anspruch 1 oder 2, wobei die Teilchen (G) des grünen lumineszierenden Materials mit einer Beschichtung aus Silizium versehen sind, das von der Beschichtung aus Aluminiumoxid umgeben ist.

5. Niederdruckquecksilberdampfentladungslampe nach Anspruch 1 oder 2, wobei die lumineszierende Beschichtung weiterhin ein blau lumineszierendes Material aufweist.

6. Niederdruckquecksilberdampfentladungslampe nach Anspruch 5, wobei das blau lumineszierende Material $BaMgAl_{10}O_{17}$:Eu oder $(Sr,Ca,Mg)_5(PO_4)_3Cl$:Eu aufweist.

7. Niederdruckquecksilberdampfentladungslampe nach Anspruch 1 oder 2, wobei die Mittel zum Beibehalten der Entladung in dem Entladungsraum (13) Elektroden (20b) aufweisen, die in dem Entladungsraum (13) vorgesehen sind.

8. Kompakte Fluoreszenzlampe mit einer Niederdruckquecksilberdampfentladungslampe nach Anspruch 1 oder 2, **dadurch gekennzeichnet, dass** an dem Entladungsgefäß der Niederdruckquecksilberdampfentladungslampe ein Lampengehäuse befestigt ist, wobei dieses Lampengehäuse mit einer Lampenkappe versehen ist.

## Revendications

1. Lampe à décharge à vapeur de mercure à basse pression, comprenant :

   - un récipient de décharge luminescent (10) enfermant, de manière étanche aux gaz, un espace de décharge (13) pourvu d'un remplissage de mercure et d'un gaz rare,
   - le récipient de décharge (10) comprenant des moyens de décharge destinés à maintenir une décharge dans l'espace de décharge (13),
   - le récipient de décharge (10) étant pourvu d'une couche luminescente (17), la couche luminescente (17) comprenant un mélange d'au moins un matériau luminescent rouge et un matériau luminescent vert,
   - le matériau luminescent rouge comprenant $(Y,Gd)_2O_3$:Eu,
   - le matériau luminescent vert comprenant $(Ba,Ca,Sr)_2SiO_4$:Eu et/ou $(Sr,Ca,Ba,Mg,Zn)Si_2N_2O_2$:Eu,

- des particules (G) du matériau luminescent vert étant entourées par un revêtement (21) d'oxyde d'aluminium.

**2.** Lampe à décharge à vapeur de mercure à basse pression selon la revendication 1, dans laquelle les particules (G) du matériau luminescent vert et les particules (R) du matériau luminescent rouge présentent un diamètre moyen supérieur ou égal à 2 $\mu$m

**3.** Lampe à décharge à vapeur de mercure à basse pression selon la revendication 1 ou 2, dans laquelle au moins 50 % des particules (G, R) des matériaux luminescents vert et rouge présentent un diamètre moyen supérieur ou égal à 5 $\mu$m

**4.** Lampe à décharge à vapeur de mercure à basse pression selon la revendication 1 ou 2, dans laquelle les particules (G) du matériau luminescent vert sont pourvues d'un revêtement de silice entouré par le revêtement d'oxyde d'aluminium.

**5.** Lampe à décharge à vapeur de mercure à basse pression selon la revendication 1 ou 2, dans laquelle la couche luminescente comprend en outre un matériau luminescent bleu.

**6.** Lampe à décharge à vapeur de mercure à basse pression selon la revendication 5, dans laquelle le matériau luminescent bleu comprend $BaMgAl_{10}O_{17}$:Eu ou $(Sr,Ca,Mg)_5(PO_4)_3Cl$:Eu.

**7.** Lampe à décharge à vapeur de mercure à basse pression selon la revendication 1 ou 2, dans laquelle les moyens destinés à maintenir la décharge dans l'espace de décharge (13) comprennent des électrodes (20b) disposées dans l'espace de décharge (13).

**8.** Lampe fluocompacte comprenant une lampe à décharge à vapeur de mercure à basse pression selon la revendication 1 ou 2, **caractérisée en ce qu'**un dispositif d'éclairage est attaché au récipient de décharge de la lampe à décharge à vapeur de mercure à basse pression, lequel dispositif d'éclairage est pourvu d'une calotte de lampe.

FIG. 1A

EP 1 948 758 B1

FIG. 1B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0067295 A
- EP 1428863 A1